# EUROPEAN PATENT APPLICATION

(11) **EP 4 760 993 A1**
(43) Date of publication of application: **17.06.2026**
(21) Application number: 24219138.5
(22) Date of filing: 11.12.2024
(51) Int. Cl.: H01R 4/48, H01R 13/187, H01R 43/16, H01R 13/11

(54) **INTEGRATED STRAIN RELIEF**

(30) Priority: 10.12.2024 US 202418975069
(71) Applicant: Aptiv Technologies AG, 8200 Schaffhausen (CH)
(72) Inventor: DURSE, Nicholas, 8200 Schaffhausen (CH); MORELLO, John, 8200 Schaffhausen (CH); RAINEY, James, 8200 Schaffhausen (CH); LOVITZ, William, 8200 Schaffhausen (CH)
(74) Representative: Bardehle Pagenberg Partnerschaft mbB Patentanwälte Rechtsanwälte

(57) **Abstract**

A U-shaped retainer includes a spring configured to exert a contact force on a terminal against a mating terminal. In some examples, the U-shaped retainer includes a strain relief feature integrated with the spring that reduces an occurrence of overstress of the spring. In some examples, the U-shaped retainer includes a spring with a first spring portion and a second spring portion, and the U-shaped retainer includes at least one opening in the second spring portion.

## Description

### TECHNICAL FIELD OF THE INVENTION

This disclosure relates to electrical connectors and more specifically, electrical connectors configured to couple a high voltage bus bar to a high voltage terminal.

### BACKGROUND

It is known to use electrical terminals capable of carrying electrical current in excess of 100 amperes at voltages greater than 60 volts for example in electric vehicles (EVs) and hybrid-electric vehicles (HEVs). In addition, as internal combustion engine (ICE) vehicles become more electrified to reduce emission of greenhouse gases, electrical terminals require increasingly robust and reliable designs. A need exists for improvements in connectors configured to reliably couple high voltage terminals to one another.

### SUMMARY

In some aspects, a U-shaped retainer includes a spring configured to exert a contact force on a terminal against a mating terminal. The U-shaped retainer further includes a strain relief feature integrated with the spring that reduces an occurrence of overstress of the spring.

In some aspects, a method includes bending a planar metallic substrate at a first position to form a first spring portion. The method further includes bending the planar metallic substrate at a second position to form a second spring portion. The method further includes bending tabs in the planar metallic substrate to form a strain relief feature that reduces an occurrence of overstress of the first spring portion and the second spring portion.

In some aspects, a U-shaped retainer is described. The U-shaped retainer includes a spring that includes a first spring portion integrated with a second spring portion. The U-shape retainer includes at least one opening in the second spring portion.

### BRIEF DESCRIPTION OF THE DRAWINGS

FIGS. 1A, 1B, and 1C depict various perspective views of a connection system that includes a U-shaped retainer with an integrated strain relief feature according to some embodiments.
FIG. 2A depicts a side view of a connection system that includes a terminal in a U-shaped retainer with an integrated strain relief feature according to some embodiments.
FIG. 2B depicts an opposed side view of a connection system that includes a mating terminal coupled to a terminal in a U-shaped retainer that has an integrated strain relief feature according to some embodiments.
FIG. 2C depicts an end view of a connection system that includes a mating terminal coupled to a terminal in a U-shaped retainer with an integrated strain relief feature according to some embodiments.
FIG. 2D depicts an opposed end view of a mating terminal coupled to a terminal in a U-shaped retainer with an integrated strain relief feature according to some embodiments.
FIGS. 3A-3C depict an assembly process of a high voltage connection system with U-shaped retainer with an integrated strain relief feature according to some embodiments.
FIG. 4 is a flow diagram that depicts a method of making a U-shaped retainer with an integrated strain relief feature according to some embodiments.

### DETAILED DESCRIPTION OF THE DRAWINGS

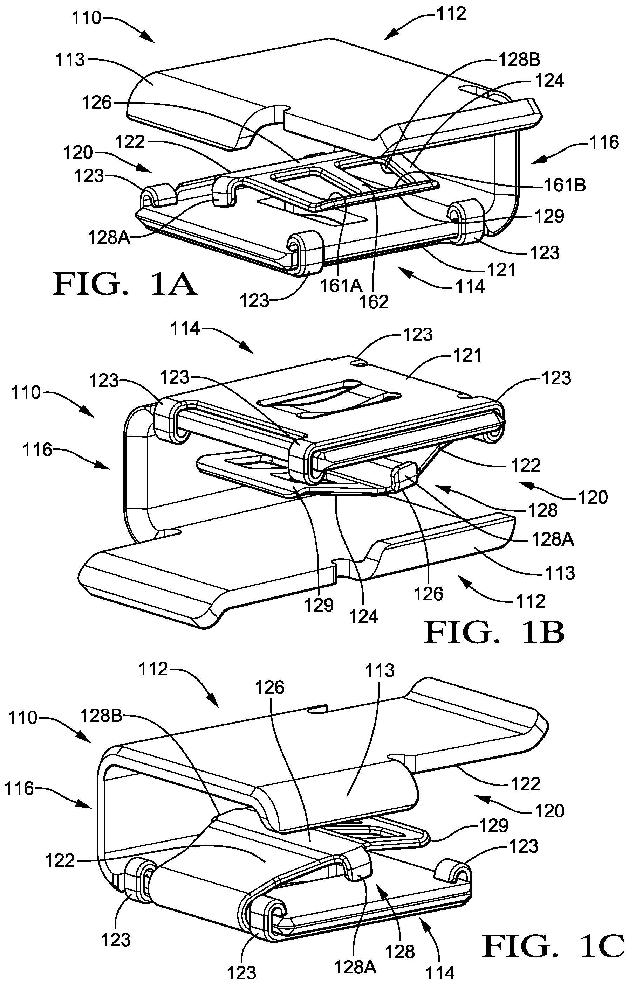

FIGS. 1A, 1B, and 1C depict various perspective views of a U-shaped retainer 110 with an integrated strain relief feature 128 according to some embodiments. As shown in FIGS. 1A-1C, the U-shaped retainer 110 is configured to electrically and mechanically couple a pair of terminals to one another. The U-shaped retainer 110 includes a first side 112 with a lip 113 configured to retain a first terminal such as a high voltage bus bar, and a second side 114 that includes a spring 120 configured to apply a contact force on a second terminal, such as a high-voltage terminal, against the first terminal to electrically couple the pair of terminals to one another and retain the terminal ends in the U-shaped retainer 110. The U-shaped retainer 110 further includes a third side 116 perpendicular to the first side 112 and the second side 114 that works with the lip 113 to retain a terminal within the U-shaped retainer 110 for mating with a corresponding mating terminal.

As shown in FIGS. 1A-1C, the spring 120 includes a first spring portion 122 coupled to the U-shaped retainer at the second side 114, and a second spring portion 124 that is integrated with the first spring portion 122 and includes a contact surface 129 configured to pushed against a surface of the second side 114 of the U-shaped retainer responsive to a second terminal being inserted into the U-shaped retainer against the spring 120. As shown in FIGS. 1A-1C, the second spring portion 124 is integrated with and coupled to the first spring portion 122 through a contact portion 126 which is configured to be arranged in contact with a surface of a second terminal inserted into the U-shaped retainer 110.

As shown in FIGS. 1A-1C, the spring 120 includes an integrated strain relief feature 128. As shown in FIGS. 1A-1C, the integrated strain relief feature 128 includes tabs 128A, 128B that extend perpendicularly from the sides of the spring 120, specifically from the contact portion 126 of the spring 120 in the depicted example. As shown in FIGS. 1A-1C, the tabs 128A, 128B are arranged such that when the spring 120 is compressed toward the second side 114 of the U-shaped retainer 110 a mating terminal, the strain relief feature 128 (e.g., tabs 128A, 128B) are pressed against the second side 114 and reduce an occurrence, or inhibit, the spring 120 from being overstressed. In some examples, the contact portion 126 and the tabs 128A, 128B are substantially rigid, while the first spring portion 122 and the second spring portion 124 are configured to deflect in response to insertion of the mating terminal. In some examples, overstress may reduce a spring constant of the spring 120 and thus a contact force created by the spring 120, which may may render the U-shaped retainer 110 less reliable to mate a pair of corresponding terminals and/or to retain mated terminals in the U-shaped retainer 110.

In some examples, the U-shaped retainer 110 is formed by bending a planar sheet of a metallic material such as sheet metal as one non-limiting example. As one example, the first, second, and third sides 112, 114, 116 of the U-shaped retainer 110 may be formed by bending a planar sheet of material with a substantially uniform thickness into a U-shape. Likewise, spring 120 may be formed of the same or a different planar sheet of metallic material of the same or different substantially uniform thickness. For example, as shown in FIGS. 1A-1C, the spring 120 may formed of a planar sheet of material bent to form fixation tabs 123 that secure the spring 120 to the second side 114 of the U-shaped retainer 110.

As shown in FIGS. 1A-1C, tabs 128A, 128B may be cut from the planar sheet of material extending from the contact portion 126, and bent perpendicularly (e.g., downwards towards the second side 114 of the U-shaped retainer 110 in the example of FIGS. 1A-1C) to form the integrated strain relief feature 128. In the example of FIGS. 1A-1C, the strain relief feature 128 is integrated with the spring 120 as it is part of the spring 120 and not part of the second side 114 of the U-shaped retainer 110. The strain relief feature 128 is part of the spring 120 and engages with the second side 114 of the U-shaped retainer 110 to reduce an occurrence of overstress of the spring 120. Accordingly, the U-shaped retainer 110 may operate more effectively to reliably couple and retain terminals with a consistent contact/retention force in comparison with other connection systems used to couple similar types of terminals.

The spring 120 may be formed with one or more opening(s) in the spring 120, specifically with openings 161A, 161B formed in the second spring portion 124 as shown in the FIG. 1A example. In some examples, the openings 161A, 161B are used to tune a spring constant of the second spring portion 124 such that a desired contact and/or retention force is asserted against a mating terminal by the spring 120. For example, the spring constant of the second spring portion 124 may be selectable based on a number, size, shape, or other characteristic of the openings 161A, 161B. The openings 161A, 161B may include windows as shown in FIG. 1A or any other shape to selectively remove material from the second spring portion 124 to reduce a spring constant of the second spring portion 124. In some examples, the openings 161A, 161B may enable spring 120 to be made relatively wide and thus increase a contact surface of the contact portion 126 without increasing the spring constant of the spring 120 such that it is no longer effective to receive terminals for coupling. In some examples, where the second spring portion 124 includes one or more separator(s) 162 between a pair of openings 161A, 161B as shown in the example of FIGS. 1A-1C, a spring constant of the second spring portion 124 may be selectable based on width of the separator 162.

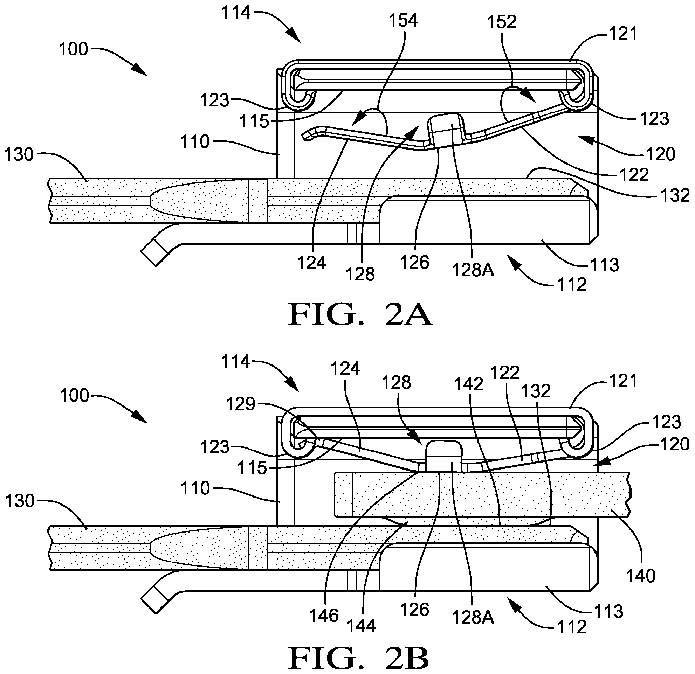

FIG. 2A depicts a side view of a connection system 100 that includes a U-shaped retainer 110 a terminal 130 arranged for mating in a U-shaped retainer 110 with an integrated strain relief feature 128 according to some embodiments. In the example of FIG. 2A, the terminal 130 may be a high voltage (HV) terminal. In some examples, the terminal 130 may be a bus bar of a vehicle electrical system or another HV terminal. In other example not depicted, the terminal 130 is a low voltage terminal or other type of terminal.

As shown in the FIG. 2A example, as a step to assemble connection system 100, the terminal 130 is retained in the U-shaped retainer 110. As shown, in FIG. 2A, the terminal 130 is arranged on a surface of the first side 112 of the U-shaped retainer 110 between the third side 116 and the lip 113. As shown in the FIG. 2A example, the terminal 130 includes a contact surface 132 configured to be in contact with a corresponding mating terminal (not shown in FIG. 2A) in the U-shaped retainer 110.

As shown in FIG. 2A, the U-shaped retainer 110 includes a second side 114 with a spring 120 configured to deflect in a direction opposed to the contact surface 132 of the terminal 130. As shown in FIG. 2A, the spring 120 includes a support portion 121 on an exterior surface of the U-shaped retainer 110, and fixation tabs 123 that wrap around a thickness of the U-shaped retainer 110 to secure the spring 120 in position on the second side 114 of the U-shaped retainer 110. As shown in FIG. 2A, the spring 120 includes a first spring portion 122 that extends from the support portion 121 and is arranged to deflect in a first direction 152 responsive to a mating terminal (not shown in FIG. 2A) being inserted into the U-shaped retainer 110, and a second spring portion 124 configured to deflect in a second direction 154 opposed to the first direction 152 responsive to the mating terminal being inserted into the U-shaped retainer 110. As shown in FIG. 2A, the contact portion 126 couples the first spring portion 122 to the second spring portion 124 and is configured to be in contact with a corresponding mating terminal in the U-shaped retainer 110. As shown in FIG. 2A, the second spring portion 124 includes a contact surface 129 configured to be in contact against a corresponding inner surface 115 of the U-shaped retainer 110 when a mating terminal (not shown in FIG. 2A) is inserted in the U-shaped retainer 110. As shown in FIG. 2A, the spring 120 includes an integrated strain relief feature 128, which includes tabs 128A (and 128B not visible in FIG. 2A) that extend perpendicularly from the contact portion 126 such that when a corresponding mating terminal is inserted into the U-shaped retainer 110 the tabs 128A, 128B engage with the inner surface 115 and reduce an occurrence of overstress (i.e., being compressed too far towards the inner surface 115) such as to materially reduce a spring constant of the spring 120 and/or a contact force asserted against the mating terminal.

In some examples, the U-shaped retainer 110 is configurable to enable a connection to a mating terminal (e.g., a mating high voltage terminal where the terminal 130 is a HV terminal or HV bus bar) that is configurable between 90 and 180 degrees relative to the terminal 130. For example, the U-shaped retainer 110 may be configured to receive a mating terminal for coupling through an open end of the U-shaped retainer 110, in a direction into the page in the FIG. 2A diagram. In other examples, a mating terminal may be inserted into an opening at the right side of the U-shaped connector relative to the FIG. 2A diagram (in a direction opposed to a direction the terminal 130 is arranged in the U-shaped connector). In either case, the spring 120, specifically the contact portion 126 of the spring 120, may exert a force against the mating terminal into the terminal 130, electrically coupling the terminal 130 and the mating terminal together and securing the terminals 130, 140 in the U-shaped retainer 110.

FIG. 2B depicts a side view of a connection system 100 with a mating terminal 140 coupled to a terminal 130 in a U-shaped retainer 110 with an integrated strain relief feature 128 according to some embodiments. As shown in FIG. 2B, like FIG. 2A, a terminal 130 is arranged in a mating position at a first side 112 of the U-shaped retainer, between a third side 116 of the U-shaped retainer and the lip 113. In the example of FIG. 2B, a mating terminal 140 has been inserted into the U-shaped retainer 110, arranged parallel to the terminal 130 (i.e., at substantially 180 degrees relative to the terminal 130). As described above, in other examples not shown in FIG. 2B the mating terminal 140 may be inserted into the U-shaped retainer 110 in a direction perpendicular to the terminal 130 (e.g., at substantially 90 degrees relative to the terminal 130). In the example of FIG. 2B, the mating terminal 140 includes optional protrusions 144 that extend outward from a mating side of the mating terminal 140 and define a mating surface 142 configured to be arranged contacting with a contact surface 132 of the terminal 130 when mated in the U-shaped retainer 110.

As shown in FIG. 2B, with the mating terminal 140 inserted into the U-shaped retainer 110, a surface 146 of the mating terminal 140 is in contact the contact portion 126 of spring 120, which compresses the first spring portion 122 and the second spring portion 124 towards the inner surface 115 of the U-shaped retainer, with contact surface 129 in contact with the inner surface 115. Arranged as shown in FIG. 2B, the spring 120 exerts a contact force against the mating terminal 140, which compresses the terminal 130 between the mating terminal 140 and the second side 112 of the U-shaped retainer 110, thereby securing the terminals 130, 140 in the U-shaped retainer 110 to assemble connection system 100. As shown in FIG. 2B, with the mating terminal 140 inserted, tabs 128A, 128B of the integrated strain relief feature 128 interacts with the inner surface 115 of the U-shaped retainer 110 to reduce an occurrence of overstress on the spring 120, i.e., a likelihood that spring 120 is compressed too far against the inner surface 115 so as to reduce a spring constant of spring 120 in a manner that spring 120 is less reliable to electrically couple the terminal 130 and the mating terminal 140.

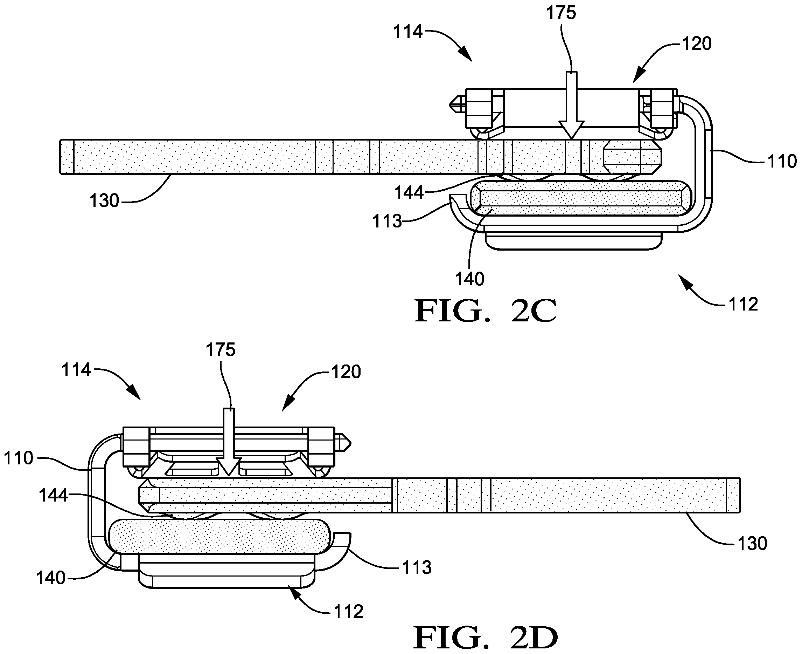

FIGS. 2C is an end view, and FIG. 2D is an opposed end view of connection system 100 with a mating terminal 140 inserted in the U-shaped retainer 110 according to some embodiments. In contrast with the examples of FIGS. 2A and 2B, in the example of FIG. 2C the mating terminal 140 is arranged perpendicular to the terminal 130 in the U-shaped retainer 110. As shown in FIG. 2C, terminal 130, which may be a high-voltage terminal and may be a bus bar in some examples, is arranged at a first side 112 of the U-shaped retainer between the third side 116 of the U-shaped retainer and the lip 113. As shown in FIGS. 2C and 2D, a mating terminal 140, which may be a high voltage terminal and optionally includes protrusions 144 as shown, has been inserted into the U-shaped retainer 110 between the terminal 130 and the spring 120 at the second side 114 of the U-shaped retainer 110. As shown in FIGS. 2C and 2D, with the mating terminal 140 inserted, the spring 120 exerts a contact force 175 on the mating terminal 140, against the terminal 130. Although not visible in FIGS. 2C and 2D, with connection system 100 assembled as shown in FIG. 2C and 2D, the strain relief feature 128 integrated with the spring 120 reduces an occurrence of overstress of the spring 120.

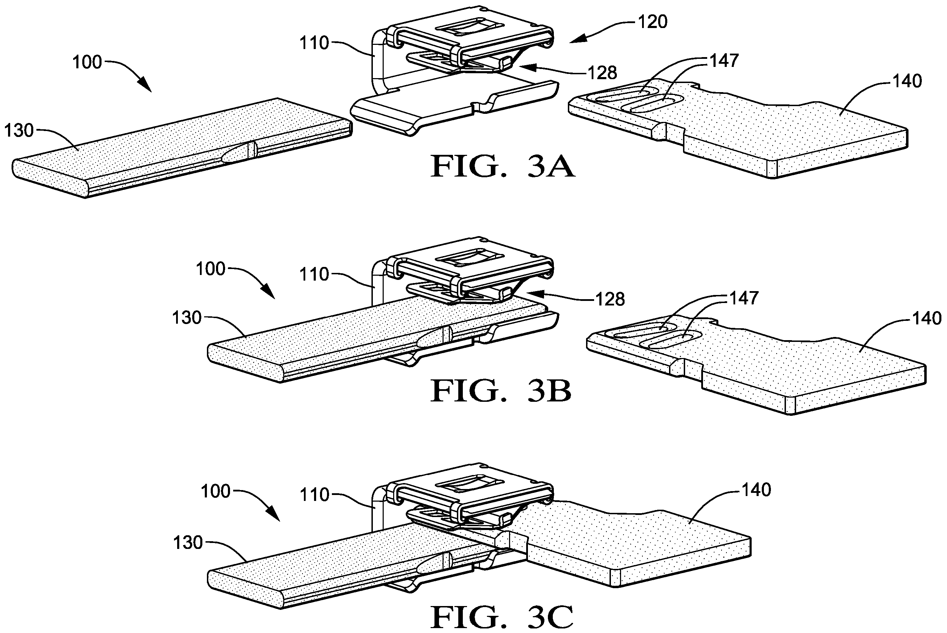

FIGS. 3A-3C depict one example of an assembly process of connection system 100, which includes using a U-shaped retainer 110 to electrical couple a terminal 130 to a mating terminal 140. In the example of FIGS. 3A-3C, the terminal 130 is a high voltage bus bar, and the mating terminal 140 is a high voltage terminal configured to be electrically coupled with the high voltage bus bar. In other examples, other types of terminals may be used with connection system 100, including low voltage terminals in some examples. As shown in FIG. 3A, the mating terminal 140 includes recesses 147 formed in the underside of the mating terminal 140 that correspond to optional protrusions 144 in a mating side of the mating terminal 140 as described above with respect to FIG. 2B.

As shown in FIGS. 3A, in the depicted assembly process the mating terminal 140 is arranged perpendicularly, or at 90 degrees, relative to an orientation of terminal 130 in the U-shaped retainer 110. From this perspective, the examples of FIGS. 3A-3C correspond to the examples shown in FIGS. 2C and 2D. In other examples, the mating terminal 140 may instead be arranged in parallel to an orientation of terminal 130 in the U-shaped retainer 110, as depicted in the example of FIGS. 2A and 2B.

As shown in FIG. 3B, the terminal 130 has been arranged in the U-shaped retainer 110, at the first side 112 of the U-shaped retainer 110 supported by the lip 113. In the example of FIG. 3B, the terminal 130 is arranged in a staged position in preparation for mating with mating terminal 140.

As shown in FIG. 3C, the mating terminal 140 has been inserted into the U-shaped retainer 110 arranged perpendicular to the orientation of the terminal 130. Arranged as shown in FIG. 3C, the spring 120 exerts a contact force 175 against the mating terminal 140, which compresses the terminal 130 between the mating terminal 140 and the U-shaped retainer 110. As described herein, mated as shown in FIG. 3C, the integrated strain relief features 128 of the spring 120 reduces an occurrence of overstress of the spring 120, which enable connection system 100 to operate with improved reliability in comparison with tradition connection systems.

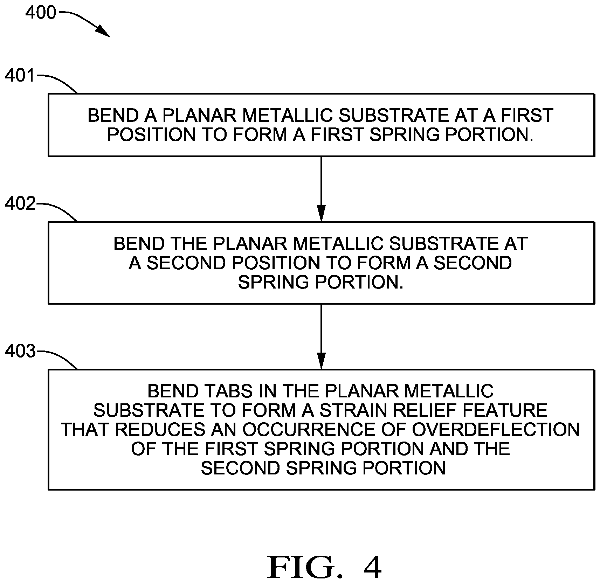

FIG. 4 is a flow diagram that depicts one example of forming a U-shaped retainer 110 according to some embodiments. As shown in FIG. 4, at 401, the method includes bending a planar metallic substrate at a first position to form a first spring portion 122. The first spring portion 122 may be configured to be compressed in a first direction 152 responsive to a mating terminal 140 being inserted into the U-shaped retainer 110. As shown in FIG. 4, at 402, the method further includes bending the planar metallic substrate at a second position to form a second spring portion 124. In some examples, the second spring portion 124 is configured to deflect in a second direction 154 opposed to the first direction 152 in which the first spring portion 122 is compressed responsive to a mating terminal 140 being inserted into the U-shaped retainer 110. In some examples, the method further includes forming a contact portion 126 between the first spring portion 122 and the second spring portion 124.

As shown in FIG. 4, at 403, the method further includes bending tabs 128A, 128B in the planar metallic substrate to form an integrated strain relief feature 128 configured to prevent/inhibit/reduce an occurrence of overdeflection of the spring 120 that may result in a reduction in spring constant of the spring 120 and a contact force 175 exerted by the spring against a mating terminal 140. In some examples, the method includes cutting the planar metallic substrate before bending the planar metallic substrate at the first position to form the tabs 128A, 128B. In some examples, the method includes cutting at least one opening 161A, 161B in the planar metallic substrate in the second spring portion 124 to tune a spring constant of the second spring portion 124.

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. It is therefore intended that the appended claims encompass any such modifications or embodiments.

### Clauses

Clause 1. A U-shaped retainer, comprising: a spring configured to exert a contact force on a terminal against a mating terminal; and a strain relief feature integrated with the spring that reduces an occurrence of overstress of the spring.

Clause 2. The U-shaped retainer of clause 1, wherein the spring includes a first spring portion integrated with a second spring portion and a contact portion integrated with and arranged between the first spring portion and the second spring portion.

Clause 3. The U-shaped retainer of clause 2 wherein the strain relief feature extends from sides of the contact portion.

Clause 4. The U-shaped retainer of any of clauses 2 and 3, wherein the strain relief feature comprises tabs that extend perpendicularly from a planar surface of the contact portion.

Clause 5. The U-shaped retainer of any of clauses 2-4, wherein the first spring portion, the second spring portion, the contact portion, and the strain relief feature are integrally formed from a planar metal substrate.

Clause 6. The U-shaped retainer of clause 5, wherein the first spring portion, the second spring portion, the contact portion, and the strain relief feature are integrally formed with a substantially uniform thickness.

Clause 7. The U-shaped retainer of any of clauses 2-6, wherein the contact portion and the strain relief feature are substantially rigid.

Clause 8. The U-shaped retainer of any of clauses 2-7, wherein the strain relief feature reduces an occurrence of overstress of the first spring portion in a first direction and the second spring portion in a second direction.

Clause 9. The U-shaped retainer of any of clauses 2-8, further comprising: at least one opening formed in the second spring portion.

Clause 10. The U-shaped retainer of clause 9, wherein a spring constant of the second spring portion is selectable based one or more of a size, shape, and number of the at least one opening.

Clause 11. The U-shaped retainer any of clauses 9 and 10, wherein the second spring portion includes a separator between a pair of openings.

Clause 12. The U-shaped retainer of clause 11, wherein a spring force of the second spring portion is selectable based on a width of the separator.

Clause 13. The U-shaped retainer of clause any o clauses 1-12, wherein the mating terminal comprises a bus bar.

Clause 14. A method, comprising: bending a planar metallic substrate at a first position to form a first spring portion; bending the planar metallic substrate at a second position to form a second spring portion; and bending tabs in the planar metallic substrate to form a strain relief feature that reduces an occurrence of overstress of the first spring portion and the second spring portion.

Clause 15. The method of clause 14, further comprising: cutting the planar metallic substrate before bending the planar metallic substrate at the first position to form the tabs.

Clause 16. The method of any of clauses 14 and 15, further comprising: cutting at least one opening in the planar metallic substrate in the second spring portion to tune a spring constant of the second spring portion.

Clause 17. A U-shaped retainer, comprising: a spring that includes a first spring portion integrated with a second spring portion; and at least one opening in the second spring portion.

Clause 18. The U-shaped retainer, of clause 17, wherein a spring constant of the second spring portion is selectable based one or more of a size, shape, and number of the at least one opening.

Clause 19. The U-shaped retainer of any of clauses 17 and 18, wherein the second spring portion includes a separator between a pair of openings.

Clause 20. The U-shaped retainer of clause 19, wherein a spring force of the second spring portion is selectable based on a width of the separator.

## Claims

1. A U-shaped retainer, comprising:
a spring (120) configured to exert a contact force (175) on a terminal (130) against a mating terminal (140); and
a strain relief feature (128) integrated with the spring (120) that reduces an occurrence of overstress of the spring (120).

2. The U-shaped retainer of claim 1, wherein the spring (120) includes a first spring portion (122) integrated with a second spring portion (124) and a contact portion (126) integrated with and arranged between the first spring portion (122) and the second spring portion (124), wherein preferably the strain relief feature (128) extends from sides of the contact portion (126).

3. The U-shaped retainer of claim 2, wherein the strain relief feature comprises tabs (128B, 128A) that extend perpendicularly from a planar surface of the contact portion (126).

4. The U-shaped retainer of claim 2 or 3, wherein the first spring portion (122), the second spring portion (124), the contact portion (126), and the strain relief feature (128) are integrally formed from a planar metal substrate, wherein preferably the first spring portion (122), the second spring portion (124), the contact portion (126), and the strain relief feature (128) are integrally formed with a substantially uniform thickness.

5. The U-shaped retainer of any one of claims 2 to 4, wherein the contact portion (126) and the strain relief feature (128) are substantially rigid.

6. The U-shaped retainer of any one of claims 2 to 5, wherein the strain relief feature (128) reduces an occurrence of overstress of the first spring portion (122) in a first direction (152) and the second spring portion (124) in a second direction (154).

7. The U-shaped retainer of any one of claims 2 to 6, further comprising:
at least one opening (161A, 161B) formed in the second spring portion (124), and wherein preferably a spring constant of the second spring portion (124) is selectable based on one or more of a size, shape, and number of the at least one opening (161A, 161B).

8. The U-shaped retainer of claim 7, wherein the second spring portion (124) includes a separator (162) between a pair of openings (161A, 161B), and wherein preferably a spring force of the second spring portion (124) is selectable based on a width of the separator (162).

9. The U-shaped retainer of any one of the preceding claims, wherein the mating terminal (130) comprises a bus bar.

10. A method, comprising:
bending a planar metallic substrate at a first position to form a first spring portion (122);
bending the planar metallic substrate at a second position to form a second spring portion (124); and
bending tabs (128B) (128A) in the planar metallic substrate to form a strain relief feature that reduces an occurrence of overstress of the first spring portion (122) and the second spring portion (124).

11. The method of claim 10, further comprising:
cutting the planar metallic substrate before bending the planar metallic substrate at the first position to form the tabs (128A, 128B).

12. The method of claims 10 or 11, further comprising:
cutting at least one opening in the planar metallic substrate in the second spring portion (124) to tune a spring constant of the second spring portion (124).

13. A U-shaped retainer, comprising:
a spring (120) that includes a first spring portion (122) integrated with a second spring portion (124); and
at least one opening in the second spring portion (124).

14. The U-shaped retainer, of claim 13, wherein a spring constant of the second spring portion (124) is selectable based one or more of a size, shape, and number of the at least one opening.

15. The U-shaped retainer of claim 13 or 14, wherein the second spring portion (124) includes a separator between a pair of openings (161A, 161B), and wherein preferably a spring force of the second spring portion (124) is selectable based on a width of the separator.
